# EUROPEAN PATENT SPECIFICATION

(11) **EP 1 664 497 B1**
(45) Date of publication and mention of the grant of the patent: **02.12.2009**
(21) Application number: 04775411.4
(22) Date of filing: 09.09.2004
(51) Int. Cl.: F01N 3/18

(54) **PISTON-TYPE INTERNAL COMBUSTION ENGINE**
KOLBEN-VERBRENNUNGSMOTOR
MOTEUR A COMBUSTION INTERNE DE TYPE PISTON

(30) Priority: 09.09.2003 SE 0302418; 25.11.2003 SE 0303201
(43) Date of publication of application: 07.06.2006
(60) Divisional application: 09004214.4
(73) Proprietor: VOLVO LASTVAGNAR AB, 405 08 Göteborg (SE)
(72) Inventor: HINZ, Andreas, S-439 32 Onsala (SE); SALOMONSSON, Per, S-427 38 Billdal (SE); ANDERSSON, Lennart, S-432 95 Varberg (SE); PERSSON, Per, S-433 41 Partille (SE)
(74) Representative: Fröhling, Werner Otto
(86) International application number: PCT/SE2004/001306
(87) International publication number: WO 2005/024195

(56) References cited:
- EP-A2- 0 433 772
- EP-A2- 0 586 176
- DE-A1- 10 130 633
- FR-A1- 2 831 077
- JP-A- 6 033 735
- US-A- 5 207 990
- DATABASE WPI Week 200331, Derwent Publications Ltd., London, GB; Class E36, AN 2003-319127, XP002983451 & JP 2003 013730 A (MITSUBISHI MOTOR CORP) 15 January 2003

## Description

### TECHNICAL FIELD

The present invention relates to a piston-type internal combustion engine having an intake line for delivering air to combustion chambers of the engine and an exhaust system for removing exhaust gases from said combustion chambers, the exhaust system comprising equipment for reducing environmentally harmful exhaust emissions from the engine, which is intended to function with variable load in order to propel a vehicle.

### BACKGROUND OF THE INVENTION

The statutory requirements relating to diesel engines have been tightened up and will continue to become more stringent, particularly in relation to emissions of nitrogen oxide pollutants and particulate emissions.

The quantity of nitrogen oxides formed by the combustion of fuel in an engine cylinder depends on the combustion temperature. Higher temperatures lead to a greater proportion of the atmospheric nitrogen being converted into nitrogen oxides. A known engine-based method of reducing the quantity of nitrogen dioxide formed is so-called exhaust gas recirculation (EGR) and in particular cooled EGR, which makes it possible to reduce the combustion temperature. This method is normally not sufficient, however, to meet the statutory requirements when the engine is operating at high load. This method of cooled exhaust gas recirculation (EGR) places an increased load on the cooling system of the engine and the vehicle, especially at high engine loads. This constitutes a limit to the attainment of a high power output whilst achieving lower emissions. Another known method of reducing the quantity of nitrogen dioxide, which is based on exhaust gas after-treatment, uses a so-called NOₓ trap (Lean NOₓ Absorber, LNA) to store NOₓ whilst the engine runs with excess oxygen. The NOₓ trap is regenerated by allowing the engine to run with deficient oxygen, that is to say with extra fuel admixture and/or reduced air flow, as described in US 5,473,887, for example. The method can result in a certain increased load on the engine in the form of soot formation and contamination of the engine lubricating oil, or dilution of the lubricating oil with fuel and high exhaust gas temperatures that are harmful to the exhaust system. Furthermore, it may create certain problems for the LNA system in operating efficiently at low and partial load, since an LNA system usually functions best at exhaust gas temperatures in excess of approximately 300°C, which normally means high or medium load.

In US 5,207,990 it is disclosed an exhaust gas purifying device for reducing particulate matter. In said device an oxidation catalyst is provided in a main branch upstream of an particulate trap, which trap is provided with a bypass branch.

In JP 6033735 it is disclosed an equipment for reduction of particulates, NOx and formaldehyde smell provided in the exhaust system connected to a diesel engine. In said device a oxidation catalyst is provided in a main branch upstream of an reduction catalyst which could be bypassed, which reduction catalyst and its bypass branch in turn are provided upstream of a particulate trap.

Other known systems for reducing nitrogen oxides are LNC (Lean NOₓ Catalyst), which continuously reduces nitrogen oxides under lean-burn conditions. Urea SCR (Selective Catalyst Reduction) is also used for NOₓ reduction, see US 5,540,047, for example.

### SUMMARY OF THE INVENTION

### SUMMARY OF THE INVENTION

An object of the invention is therefore to create an internal combustion engine, which will permit a functionally improved and economic use of an exhaust after-treatment system.

This object is achieved by an engine according to the characterizing part of claim 1.

### DESCRIPTION OF THE DRAWINGS

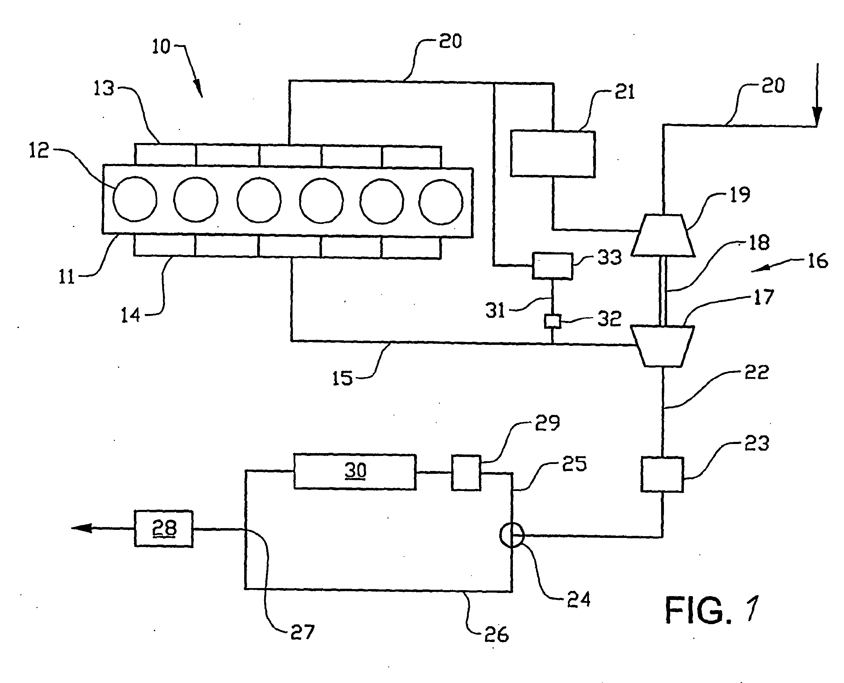

The invention will be described in more detail below with reference to exemplary embodiments as shown in the drawing attached, in which
Fig. 1 shows a diagram of an internal combustion engine according to an exemplary embodiment of the invention.

### DESCRIPTION OF THE PREFERRED EMBODIMENTS

The internal combustion engine 10 comprises an engine block 11 having six piston cylinders 12 together with inlet manifold 13 and exhaust manifold 14. Exhaust gases from the engine are fed via an exhaust line 15 to a turbine rotor 17 of a turbocharger unit 16. The turbine shaft 18 drives the compressor wheel 19 of the turbocharger unit, which by way of an intake line 20 compresses incoming air and delivers it to the inlet manifold 13 via an air intercooler 21. Fuel is fed to each cylinder 12 via injection devices (not shown). Although the figure illustrates a six-cylinder engine, the invention can also be used in conjunction with other cylinder configurations.

Exhaust gases that have passed through the turbocharger unit 16 are led onwards by way of the exhaust line 22 to an oxidizing filter device 23 to separate particles from the exhaust gas flow. Downstream of the filter device is a three-way valve 24, which according to the prior art may conduct the exhaust gases either a branch pipe 25 or via a branch pipe 26, the two branch pipes running parallel and being reunited downstream at a point 27. The exhaust gas flow is thereafter led onwards into the atmosphere via a so-called clean-up unit 28, which may comprise an oxidation catalytic converter which oxidizes (burns) emission residues (HC, CO, etc). This unit may take various forms according to the demands placed on it (system design).

The engine 10 has a system for returning exhaust gases to the intake side of the engine as so-called EGR gas, via a pipeline 31, for reducing the nitrogen oxide emission of the engine in accordance with the prior art. This line comprises a valve 32, which serves both as shut-off valve and as regulating valve for regulating the EGR flow. There is also a cooler 33 for cooling the EGR gases. The EGR system, for example, may re-circulate flows in the order of 30-60% (the gas in the inlet housing 20 is composed of 30-60% recirculated exhaust gases and the remaining 40-70% is fresh air). When the engine is operating at low load this is feasible without overloading the cooling system. At high engine loads, on the other hand, with an effective mean pressure in the order of pme = 10-15 bar and higher, these high EGR flow rates result in increased loading of the vehicle cooling system for which it is not usually designed. The internal structure of the engine is also not designed for the high cylinder pressures that can occur with high EGR contents.

When the engine is operating at low load and the composition of the gas in the inlet casing 20 is composed of 30-60% EGR, very low exhaust gas emissions, both of NOₓ and soot, can be achieved, for example, through the use of so-called homogeneous charge compression ignition (HCCI) combustion. For example, NOₓ levels of < 0.5 g/kWh and theoretically soot-free combustion can be achieved. When the engine is operating at high load, the EGR system, among other things, is restrictive.

The valves 24 and 32 are connected to an engine control unit containing control program and control data for controlling the engine with reference to input data. The engine control unit is connected, for example, to sensors which detect the engine speed and the accelerator pedal position. The engine control unit is designed to control the valve 24 so that at low load the exhaust gas flow is led through the branch pipe 26. Within this load range the exhaust emissions lie at acceptable levels without further after-treatment. In other load ranges the exhaust gas flow is led through the branch pipe 25.

Designing the internal combustion engine according to the invention means that the exhaust gas after-treatment system has minimal impact on engine operation.

According to an exemplary embodiment of the invention shown in Fig. 1 the branch pipe 25 comprises a device 29 for mixing a reducing agent, urea or ammonia into the exhaust gas flow and a downstream SCR catalytic converter 30. Regeneration takes place continuously in that the three-way valve 24 leads the exhaust gas flow through the branch pipe 25, the device 29 adding urea or ammonia, which react with NOₓ in the SCR catalytic converter, producing N₂.

The valves 24 and 32 are connected to an engine control unit containing control program and control data for controlling the engine with reference to input data. The engine control unit is connected, for example, to sensors which detect the engine speed and the accelerator pedal position. The engine control unit is designed to control the valve 24 so that at low load the exhaust gas flow is led through the branch pipe 26. Within this load range the exhaust emissions lie at acceptable levels without further after-treatment. In other load ranges the exhaust gas flow is led through the branch pipe 25, the gas flow being led through the SCR catalytic converter with continuous reduction according to the prior art.

Designing the internal combustion engine according to the invention means that the exhaust gas after-treatment system has minimal effect on engine operation. The SCR catalytic converter can function within an advantageous temperature range (medium and full load). When the engine is operating a low load, for example pme = 2 bar, the exhaust gas temperature downstream of the turbocharger is in the order of 200°C. Only when the engine is operating at an effective mean pressure of approximately pme = 5 bar does the exhaust gas temperature downstream of the turbocharger reach a level in the order of 300°C. Since NOₓ reduction is out of the question at low load, the SCR catalytic converter functions in an optimum temperature range which gives high NOₓ reduction. Furthermore, at low temperature the SCR catalytic converter is prevented from storing ammonia, which otherwise might be led onwards in the exhaust system during load transients. The fact that the SCR catalytic converter can reduce NOₓ at higher loads gives greater freedom in designing the engine cooling and supercharging system, which can afford major advantages in terms of lower costs and better engine installation solutions. A further advantage resides in the fact that a vehicle having this after-treatment system can be driven in accordance with the statutory requirements even if the reducing agent for the SCR catalytic converter has run out, in that the engine power output is reduced so that it is temporarily impossible to run the engine at high load.

If the filter device 23 is regenerated in a way that produces exhaust gas temperatures that are harmful to the SCR catalytic converter (or LNA, or LNC) the three-way valve 24 and the branch pipe 26 conduct these exhaust gases past the NOₓ reduction catalytic converter, thereby protecting this against ageing.

## Claims

1. A piston-type internal combustion engine (10) having an intake line (20) for delivering air to combustion chambers of the engine and an exhaust system (15, 22) for removing exhaust gases from said combustion chambers, the exhaust system comprising equipment (29, 30) for reducing environmentally harmful exhaust emissions from the engine, which is intended to function with variable load in order to propel a vehicle, the exhaust system (15, 22) comprises a branch pipe (26) controlled by a valve (24) and bypassing at least one part of said equipment (29, 30) for reducing environmentally harmful exhaust emissions, that the valve (24) is controlled so that it leads the exhaust gas flow through the branch pipe (26) over a part of the overall load range of the engine and that the engine is optimized in order to give acceptable exhaust emissions over said part of the overall load range of the engine **characterized in that** the branch pipe (26) is coupled in parallel with an exhaust gas after-treatment system which comprises an SCR catalytic converter (30) and a regeneratable particle filter (23) is located upstream of the valve (24), regeneration being possible whilst the exhaust gas flow is being led through the branch pipe (26).

2. The internal combustion engine as claimed in claim 1, **characterized in that** said part of the overall load range of the engine primarily comprises the low engine load range.

3. The internal combustion engine as claimed in claim 1 or 2, **characterized in that** a system (31-33) is designed to return cooled exhaust gases to the intake side of the engine in order to reduce the combustion temperature.

## Patentansprüche

1. Verbrennungsmotor (10) vom Kolbentyp mit einer Einlassleitung (20) zur Lieferung von Luft zu Verbrennungskammern des Motors und einem Auslasssystem (15, 22) zur Entfernung von Abgasen aus den Verbrennungskammern, wobei das Auslasssystem eine Einrichtung (29, 30) zur Reduzierung umweltschädlicher Abgasemissionen aus dem Motor umfasst, der für einen Betrieb mit einer variablen Last bestimmt ist, um ein Fahrzeug anzutreiben, wobei das Abgassystem (15, 22) eine Zweigleitung (26) umfasst, die durch ein Ventil (24) gesteuert wird und wenigstens einen Teil der Einrichtung (29, 30) zur Reduzierung umweltschädlicher Abgasemissionen umgeht, das Ventil (24) so gesteuert wird, dass es die Abgasströmung durch die Zweigleitung (26) über einen Teil des Gesamtlastbereiches des Motors führt, und der Motor optimiert ist, um akzeptable Abgasemissionen über den Teil des Gesamtlastbereichs des Motors abzugeben, **dadurch gekennzeichnet, dass** die Zweigleitung (26) parallel zu einem Abgasnachbehandlungssystem geschaltet ist, das einen katalytischen SCR-Konverter (30) umfasst, und ein regenerierbarer Partikelfilter (23) stromaufwärts des Ventils (24) angeordnet ist, wobei eine Regenerierung möglich ist, während die Abgasströmung durch die Zweigleitung (26) geführt wird.

2. Verbrennungsmotor nach Anspruch 1, **dadurch gekennzeichnet, dass** der Teil des Gesamtlastbereichs des Motors hauptsächlich den Niedriglastbereich des Motors umfasst.

3. Verbrennungsmotor nach Anspruch 1 oder 2, **dadurch gekennzeichnet, dass** ein System (31 bis 33) so ausgelegt ist, dass es gekühlte Abgase zu der Einlassseite des Motors zurückführt, um die Verbrennungstemperatur zu verringern.

## Revendications

1. Moteur à combustion interne du type à piston (10) comportant une conduite d'admission (20) pour amener de l'air dans des chambres de combustion du moteur, et un système d'échappement (15, 22) pour évacuer des gaz d'échappement desdites chambres de combustion, le système d'échappement comportant un équipement (29, 30) destiné à réduire des émissions d'échappement nuisibles pour l'environnement en provenance du moteur, lequel est prévu pour fonctionner à charge variable afin de propulser un véhicule, le système d'échappement (15, 22) comportant un tuyau de dérivation (26) commandée par une soupape (24) et contournant au moins une partie dudit équipement (29, 30) en vue de réduire les émissions d'échappement nuisibles pour l'environnement, de telle sorte que la soupape (24) est commandée de manière à conduire le flux de gaz d'échappement à travers le tuyau de dérivation (26) sur une partie de la plage de charge totale du moteur, et que le moteur est optimisé pour produire des émissions d'échappement acceptables sur ladite partie de la plage de charge totale du moteur, **caractérisé en ce que** le tuyau de dérivation (26) est couplé en parallèle à un système de post-traitement des gaz d'échappement comportant un convertisseur catalytique à réduction catalytique sélective (SCR) et un filtre à particules à régénération (23), situé en amont de la soupape (24), une régénération étant possible pendant que le flux de gaz d'échappement est conduit à travers le tuyau de dérivation (26).

2. Moteur à combustion interne selon la revendication 1, **caractérisé en ce que** ladite partie de la plage de charge totale du moteur comporte principalement la plage de faible charge du moteur.

3. Moteur à combustion interne selon la revendication 1 ou 2, **caractérisé en ce qu'**un système (31 à 33) est conçu de manière à ramener les gaz d'échappement refroidis vers le côté admission du moteur, afin de réduire la température de combustion.
